Europäisches Patentamt

(19) European Patent Office

Office européen des brevets

(11) Numéro de publication: **0 053 551**
**B1**

(12) **FASCICULE DE BREVET EUROPEEN**

(45) Date de publication du fascicule du brevet:
**14.11.84**

(21) Numéro de dépôt: **81401876.8**

(22) Date de dépôt: **26.11.81**

(51) Int. Cl.³: **C 03 B 35/14,** C 03 B 29/04

(54) **Procédé et dispositif pour l'alimentation d'un four de chauffage de feuilles de verre.**

(30) Priorité: **01.12.80 FR 8025437**

(43) Date de publication de la demande:
**09.06.82 Bulletin 82/23**

(45) Mention de la délivrance du brevet:
**14.11.84 Bulletin 84/46**

(84) Etats contractants désignés:
**BE DE GB SE**

(56) Documents cités:
**US - A - 1 728 538**
**US - A - 1 848 102**
**US - A - 3 101 156**

(73) Titulaire: **SAINT-GOBAIN VITRAGE, Les Miroirs 18, avenue d'Alsace, F-92400 Courbevoie (FR)**
(84) Etats contractants désignés: **BE GB SE**

(73) Titulaire: **VEGLA Vereinigte Glaswerke GmbH, Viktoria Allee 3-5, D-5100 Aachen (DE)**
(84) Etats contractants désignés: **DE**

(72) Inventeur: **Halberschmidt, Friedrich, Chr. Derichs Strasse 16, Herzogenrath (DE)**
Inventeur: **Audi, Josef, Kronenberg 61, Aachen (DE)**
Inventeur: **Radermacher, Herbert, Belven 118, Raeren (BE)**
Inventeur: **Überwolf, Heinz, Vogelsang 1, Herzogenrath (DE)**

(74) Mandataire: **Eudes, Marcel et al, Saint-Gobain Recherche 39 Quai Lucien Lefranc, F-93304 Aubervilliers Cedex (FR)**

## Description

L'invention concerne un procédé et un dispositif pour le chauffage de feuilles ou volumes de verre à la température de bombage ou de trempe par passage à plat dans un four tunnel horizontal. A l'entrée du four, ces feuilles sont disposées à espacement constant, en une file ininterrompue, sur un convoyeur qui leur fait traverser le four à vitesse constante avant de les conduire aux stations de bombage et/ou de trempe qui font suite.

Dans de nombreux cas, le transport des vitrages à travers le four s'effectue sur des rouleaux transporteurs. On connaît également des procédés selon lesquels, au moins dans la partie la plus chaude du four, il se fait sur un coussin gazeux.

On ne parvient pas, sur de tels fours, à atteindre une régulation individuelle de la température de chacun des vitrages. Il est cependant indispensable de porter ces dernies à une température aussi précise que possible si l'on veut obtenir un degré de trempe uniforme: une température trop basse entraîne une trempe insuffisante, une température trop haute un risque de déformation du volume, en particulier lorsqu'il est transporté à plat sur des rouleaux. En fait, pour obtenir un vitrage de bonne qualité optique qui possède en même temps le réseau de fragmentation désiré, il faut respecter une fourchette de température très étroite qui ne dépasse pas quelques degrés.

Dans un four tunnel, on ne peut atteindre la constance de température suffisante que si d'une part, ce four est alimenté de façon constante en énergie et que d'autre part, la vitesse de déplacement des volumes est constante, de sorte que s'établisse un équilibre énergétique. Cela signifie aussi que, pour maintenir cet équilibre, il faut ne traiter que des feuilles d'un même format et modifier sans retard les réglages pour établir un nouvel équilibre si l'on change de format. Mais l'équilibre énergétique dans le four est également détruit si l'espacement entre feuilles de verre n'est pas maintenu lui aussi.

Il s'est révélé extrêmement difficile de disposer les feuilles à espacement constant, aussi bien à la main qu'au moyen des dispositifs automatiques connus.

Si l'on considère que pour alimenter les fours tunnels modernes, on dépose à un rythme uniforme six cents volumes et plus par heure, on s'aperçoit que l'on ne dispose que d'un court laps de temps pour placer et orienter correctement chacun d'eux, ce qui explique dans une large mesure ces difficultés.

L'invention se propose d'améliorer l'équilibre thermique d'un four de bombage et/ou trempe pour atteindre une meilleure constance de la température des volumes arrivant aux postes de bombage et de trempe et par là une qualité uniforme des vitrages trempés, sous l'angle aussi bien des propriétés optiques que du degré de trempe.

L'invention a alors pour objet un procédé selon le préambule de la revendication 1. Ce dernier se caractérise par le fait que les volumes sont placés un à un, à la cadence voulue, dans une position d'attente donnée, en amont du convoyeur principal horizontal du four traversant, à une distance du volume précédent déjà engagé sur le convoyeur inférieure à l'espacement désiré à l'intérieur du four, et immobilisés un instant dans cette position pour être emportés par ledit convoyeur au moment où l'espacement désiré avec le volume précédent est atteint.

A l'expérience des difficultés qui se produisent si l'on cherche à déposer d'entrée de jeu les volumes selon un rythme aussi régulier que possible destiné à engendrer un écartement constant entre vitrages successifs, et à la suite des échecs observés, l'invention délaisse cette voie et propose d'amener intentionnellement chaque vitrage à un écartement moyen du précédent nettement plus petit que l'écartement final souhaité de sorte qu'en aucun cas ce dernier ne soit dépassé car il ne serait pas simple de réduire directement à la valeur voulue un intervalle supérieur.

Conformément à l'invention, les volumes disposés à espacement réduit sont donc immobilisés pendant que le convoyeur horizontal continue à fonctionner à vitesse uniforme, puis mis en route au moment où l'écartement souhaité est atteint; la distance franchie à partie du moment où ils ont quitté leur position d'attente est mesurée et utilisée pour provoquer la mise en route du volume suivant.

L'invention est aussi mise en oeuvre à l'aide d'une installation comprenant un convoyeur horizontal principal en mouvement continu de vitesse uniforme, à l'intérieur d'un four traversant et un convoyeur auxiliaire à entraînement séparé situé en amont du convoyeur principal.

Cette installation ou dispositif se caractérise par le fait qu'il est prévu à la jonction des deux convoyeurs, un détecteur (38) associé à un organe mesurant la distance entre le bord arrière du dernier volume (20) entraîné par le convoyeur principal (2) et le bord avant du volume suivant (20') en attente sur le convoyeur auxiliaire (12) arrêté par le détecteur pour commander un organe de transfert (23) de ces volumes sur le convoyeur principal au moment où l'espacement souhaité est atteint.

Ainsi selon ce dispositif chaque feuille est, en amont du convoyeur principal, arrêtée à faible distance de la précédente, retenue un bref instant, puis entraînée à la suite de la précédente dès que cette dernière s'est éloignée de la distance voulue sur le convoyeur toujours en mouvement.

Toutefois, selon une solution particulièrement avantageuse, les volumes sont déposés chacun à la suite sur un convoyeur auxiliaire à entraînement disposé en tête du convoyeur principal, amenés chacun, à la sortie de ce convoyeur auxiliaire, à une distance du vitrage précédent, déjà engagé sur le convoyeur principal, inférieure à l'écartement final souhaité; le convoyeur auxiliaire est arrêté chaque fois qu'un volume se présente à cette sortie, la distance franchie par le volume précédent est mesurée, et le transfert sur le convoyeur principal ainsi d'ailleurs que le redémarrage du convoyeur auxiliaire s'effectuent au moment où l'espacement désiré est atteint.

Avantageusement, les volumes sont déposés sur le convoyeur auxiliaire à la distance et à la cadence voulues pendant les périodes d'arrêt de ce convoyeur.

Un dispositif pour la mise en oeuvre du procédé comprend donc un convoyeur horizontal entraîné à vitesse constante à l'intérieur du four traversant, un convoyeur auxiliaire situé en amont du convoyeur horizontal, et muni de moyens d'entraînement séparés, enfin, à la jonction des deux convoyeurs, un détecteur associé à un organe qui mesure la distance entre le bord arrière du dernier volume entraîné par le convoyeur principal et le bord avant du volume suivant déposé à l'extrémité du convoyeur auxiliaire, et qui commande un organe de transfert du vitrage sur le convoyeur principal au moment même où l'écartement souhaité est atteint.

Avantageusement, le convoyeur auxiliaire est entraîné à une vitesse sensiblement supérieure à celle du convoyeur principal, ce qui permet d'y placer initialement les vitrages à un espacement plus important.

Une forme d'exécution d'un dispositif conforme à l'invention sera décrite ci-dessous en relation avec les figures:

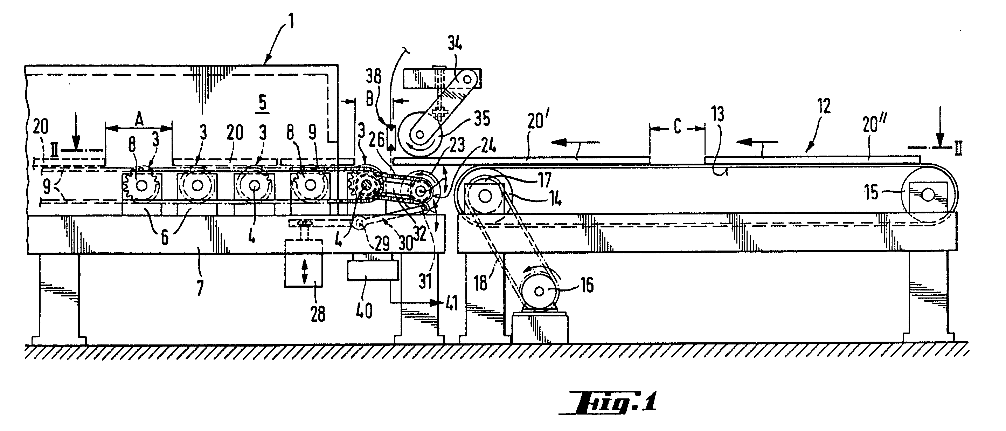

La figure 1 représente en élévation l'entrée d'un four tunnel précédé d'un convoyeur auxiliaire amenant les vitrages dans une position déterminée.

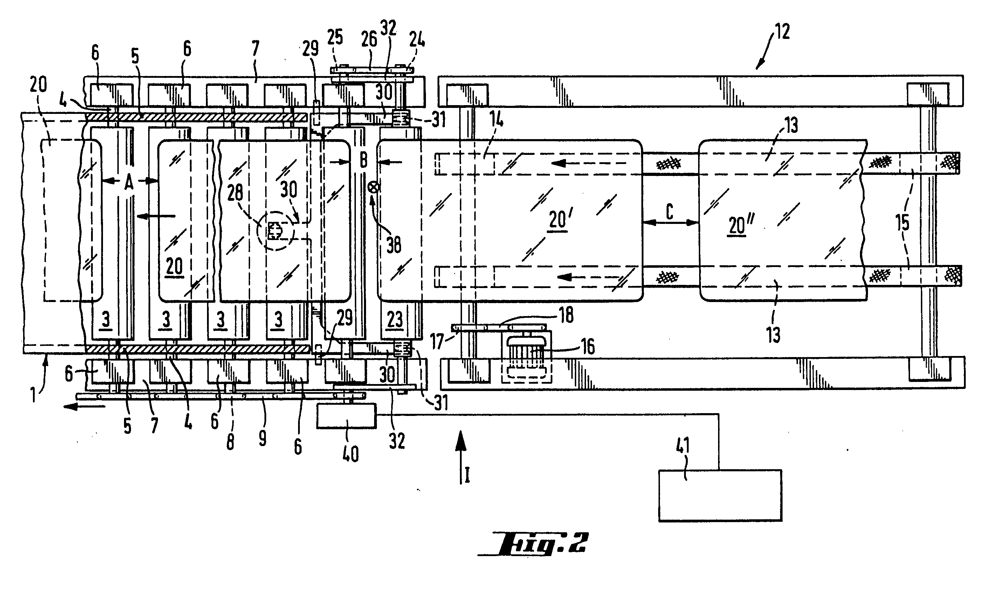

La figure 2 est une vue de dessus en coupe selon un plan horizontal suivant la ligne II-II de la figure 1.

La figure 3 représente un schéma de commande du dispositif.

Le four traversant 1 est un four tunnel à travers lequel les vitrages sont transportés à plat à vitesse constante sur un convoyeur horizontal (2) formé de rouleaux 3. Les axes 4 de ces rouleaux 3 sont montés trournants à l'extérieur des parois latérales 5, dans des paliers 6 disposés sur le bâti 7 du four. Des roues dentées 8 sont montées sur les axes 4 d'un côté du four et à l'extérieur des paliers, et une chaîne 9, entraînée par un moteur non représenté, imprime à tous les rouleaux transporteurs une vitesse de rotation constante.

A l'extrémité opposée du four 1, les volumes sortent à la température souhaitée et sont habituellement entraînés vers un poste de bombage où ils subissent un bombage cylindrique ou éventuellement sphérique, puis vers un poste de trempe où ils sont brusquement refroidis entre deux caissons de soufflage.

Le cas échéant, ils peuvent être trempés directement sans avoir subi de bombage à la sortie du four ou plus rarement ne subir qu'un bombage.

Afin que les volumes possèdent à la sortie du four 1 une température toujours identique, la vitesse de transport des rouleaux transporteurs et l'apport en énergie calorifique doivent être maintenus constant.

En amont du four traversent 1 est disposé un convoyeur auxiliaire 12 à bande sans fin formé de courroies 13 montées sur des galets 14 et 15. Les galets 14 sont entraînés par un moteur 16 auquel la roue dentée 17, placée en bout d'arbre, est reliée par une chaîne 18. La vitesse instantanée de transport de ce convoyeur auxiliaire est avantageusement de 20 à 50%, et de préférence de 20 à 30% plus grande que celle de rouleaux transporteurs 3.

Stockés au voisinage du convoyeur annexe 12, les volumes à traiter sont placés sur celui-ci manuellement ou à l'aide d'une chargeuse automatique. Le convoyeur annexe est au même niveau que le convoyeur horizontal 2 vers lequel il transporte successivement les volumes 20, puis 20', 20''...

Entre le convoyeur auxiliaire et le premier des rouleaux transporteurs 3 du convoyeur principal, sous le plan de transport, est monté un rouleau de transfert 23 relié au convoyeur 2 par une transmission comprenant des roues dentées 24 et 25 et une chaîne 26 qui lui donnent une vitesse périphérique égale à celle des rouleaux transporteurs 3. Ce rouleau de transfert 23 est capable de se déplacer entre une position basse et une position haute; en position basse, il n'est pas au contact des volumes qui le surplombent, et son mouvement de rotation n'est donc pas transmis au volume repéré ici 20'.

Un électro-aimant 28 sert à le soulever en faisant pivoter sur des paliers 29 un levier à fourche 30 dont les extrémités portent, par exemple, des galets presseurs 31 qui agissent sur son axe, celui-ci étant monté à l'extrémité de deux bras oscillants 32.

Au-dessus du rouleau de transfert 23, des bras réglables 34 portent un rouleau antagoniste 35. Quand l'électro-aimant 28 soulève le rouleau de transfert 23, qui tourne à la vitesse du convoyeur 2, le rouleau antagoniste 35 appuie sur lui le volume 20'. Il en résulte que ce dernier se trouve immédiatement entraîné à la vitesse de transport désirée et passe sur le convoyeur 2.

Derrière le rouleau antagoniste 35, le dispositif de transport comprend un détecteur 38. Il s'agit d'une barrière lumineuse à réflexion, qui, chaque fois que le bord d'un vitrage se présente à son aplomb, fournit un signal, utilisé, comme décrit par la suite, pour la commande du dispositif.

L'axe du premier rouleau transporteur 3 est lié à un générateur d'impulsions 40 qui commande un registre de comptage à sélecteur 41 permettant de régler à la valeur désirée l'écartement A entre le bord arrière du volume 20 et le bord avant du volume 20'.

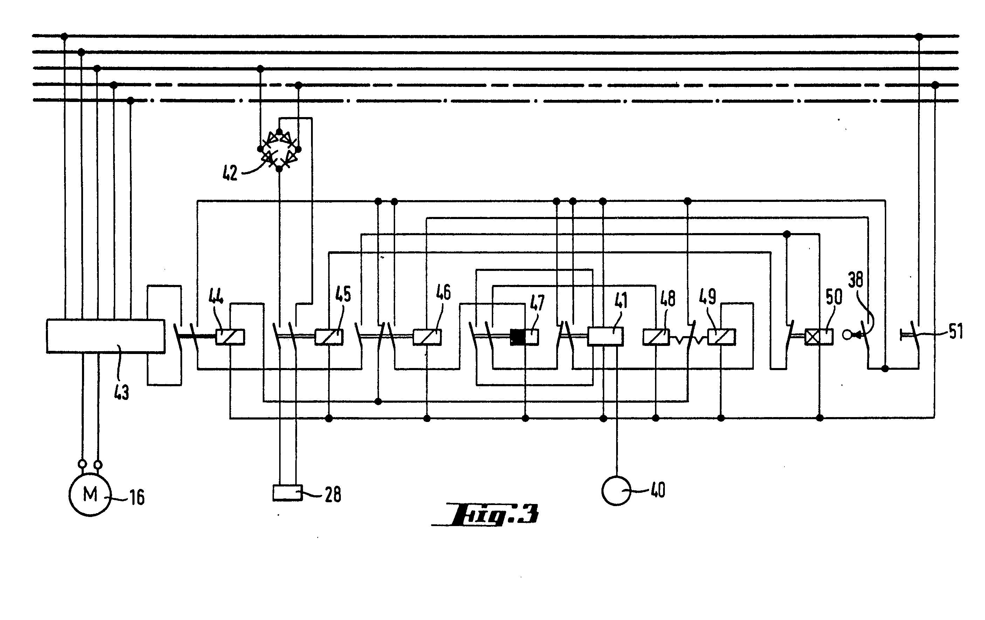

La figure 3 permet de comprendre le fonctionnement du dispositif.

Lors de l'enclenchement de l'interrupteur 51, le relais 44 est excité et le moteur électrique 16 du convoyeur 12 est mis en route par l'intermédiaire du servo-relais 43.

Quand le bord avant d'un premier volume 20 actionne la barrière lumineuse 38, le relais 46 est excité mais le relais 44 reste alimenté par le contact 48/49 de sorte que le convoyeur 12 continue d'avancer, tandis que l'électro-aimant 28, relié au réseau électrique par le redresseur 42, est mis sous tension par l'intermédiaire du contact du relais de puissance 45 et presse le rouleau de transfert 23 sur le volume 20; ce dernier, qui s'appuie sur le rouleau antagoniste 35, est instantanément mis en mouvement à la vitesse du convoyeur 2 et passe sur les rouleaux transporteurs 3 du four traversant.

Simultanément, le relais à temps 50 a été armé; après un temps déterminé par ce relais, ou, à la limite, quand le bord arrière du volume 20 passe sous la barrière lumineuse 38, désexcitant le relais 46, le relais 45 retombe, de sorte que l'électro-aimant 28 n'est plus alimenté, et le rouleau de transfert 23 s'abaisse à nouveau.

D'autre part, quand le volume 20 quitte la barrière 38, le relais 46 libère le servo-contacteur 47; celui-ci, à sa descente, fournit un signal au registre 41, pour déclencher le comptage des impulsions du générateur 40 afin de mesurer l'avance du bord arrière sur le convoyeur 2 au-delà de la barrière lumineuse.

Le servo-contacteur 47 ouvre en même temps, par l'intermédiaire de la bobine 48, le contact rémanent 48/49. Le relais 44 reste cependant alimenté par le contact du relais 46 de sorte que le convoyeur 12 continue à avancer.

Dès que le nombre d'impulsions inscrit sur le sélecteur du registre 41 est atteint, c'est-à-dire au moment où le bord arrière du volume 20 se trouve à la distance A de la barrière lumineuse, le registre 41 émet un signal qui excite la bobine 49, refermant ainsi le contact 48/49.

Mais si un volume 20' a été placé sur le convoyeur 12 suffisamment près du précédent pour que son bord avant atteigne la barrière lumineuse 38 avant la fin du comptage, c'est-à-dire alors que le volume 20 se trouve seulement à une distance B, inférieure à A, excitant ainsi le relais 46 alors que le contact 48/49 est encore ouvert, l'alimentation du relais 44 est coupée, ce qui arrête le convoyeur 12 et immobilise aussitôt le volume 20'.

On peut profiter de cet arrêt pour disposer sur le convoyeur, à une distance convenable C, un nouveau volume 20''.

Aussitôt que le nombre d'impulsions inscrit sur le registre 41 est atteint, provoquant la fermeture du contact 48/49, comme il a été dit plus haut, le relais 44 se trouve à nouveau excité et le convoyeur 12 redémarre; mais simultanément, étant donné que la barrière lumineuse 38 est interceptée, de sorte que le relais de commande 46 est alimenté, l'électro-aimant 28 soulève le rouleau de transfert 23, transférant la feuille 20' sur le convoyeur 2, à la vitesse de celui-ci, tandis que le volume 20'' s'approche à son tour.

Il suffit donc de charger le convoyeur 12 à une cadence correspondant à celle du convoyeur 2, mais avec une avance systématique sur celui-ci, pour que les feuilles successives se trouvent espacées sur le convoyeur 2 de la distance A désirée.

Pour qu'il soit possible de placer initialement les feuilles à une distance C supérieure à l'espacement B au niveau de la barrière lumineuse et même, le cas échéant, à l'espacement A désiré sur le convoyeur principal, il suffit que la vitesse du convoyeur 12 soit supérieure à celle du convoyeur principal, pour que le volume 20', dans son déplacement sur ce convoyeur, se rapproche du volume 20, sans toutefois le rattraper.

## Revendications

1. Procédé pour le chauffage homogène de feuilles ou volumes de verre de format constant par passage à plat dans un four tunnel (1) horizontal chauffé de façon homogène où les volumes sont disposés, à espacement (A) constant, en une file ininterrompue, sur un convoyeur horizontal principal (2) qui leur fait traverser le four (1) à vitesse constante, caractérisé en ce que ces volumes (20, 20' ...) sont placés un à un, à la cadence voulue, dans une position d'attente donnée, en amont du convoyeur principal horizontal (2), à une distance (B) du volume précédent déjà engagé sur le convoyeur inférieure à l'espacement désiré (A), et immobilisés un instant dans cette position pour être emportés par le convoyeur (2) au moment où l'espacement (A) est atteint.

2. Procédé selon la revendication 1, caractérisé en ce que les volumes (20, 20') sont déposés chacun à la suite sur un convoyeur auxiliaire (12) à entraînement séparé, disposé en amont du convoyeur principal (2), amenés chacun à la sortie de ce convoyeur auxiliaire à disitance inférieure à l'écartement final (A) souhaité, en ce que le convoyeur auxiliaire est arrêté chaque fois qu'un volume se présente à cette sortie, la distance franchie par le volume précédent mesurée et le transfert sur le convoyeur principal effectué au moment où l'espacement désiré est atteint.

3. Procédé selon la revendication 2, caractérisé en ce que les volumes sont déposés sur le convoyeur auxiliaire à la distance et à la cadence voulues pendant les périodes d'arrêt de ce convoyeur.

4. Dispositif pour mise en oeuvre du procédé selon l'une des revendications 2 et 3, comprenant un convoyeur horizontal principal (2) entraîné à vitesse constante à l'intérieur d'un four traversant (1), et un convoyeur auxiliaire (12) à entraînement séparé (16) situé en amont du convoyeur principal (2), caractérisé en ce qu'il est prévu à la jonction des deux convoyeurs, un détecteur (38) associé à un organe mesurant la distance entre le bord arrière du dernier volume (20) entraîné par le convoyeur principal (2) et le bord avant du volume suivant (20') en attente sur le convoyeur auxiliaire (12) arrêté par le détecteur pour commander un organe de transfert (23) de ces volumes sur le convoyeur principal au moment où l'espacemment souhaité est atteint.

5. Dispositif selon la revendication 4, caractérisé en ce que le convoyeur auxiliaire (12) est entraîné à une vitesse sensiblement supérieure à celle du convoyeur principal (2).

6. Dispositif selon la revendication 5, caractérisé en ce que le convoyeur auxiliaire est entraîné à une vitesse de 20 à 50%, et de préférence de 20 à 30% plus grande que celle du convoyeur principal.

7. Dispositif selon l'une des revendications 4 à 6, caractérisé en ce que l'organe mesurant la distance entre les bords de deux volumes successifs (20, 20') comprend un générateur d'impulsions (40) couplé au convoyeur principal (2) et un registre de comptage (41) à sélecteur.

8. Dispositif selon l'une des revendications 4 à 6, caractérisé en ce que l'organe de transfert comprend un rouleau de transfert (23) placé entre le convoyeur auxiliaire (12) et le premier rouleau (3) du convoyeur principal (2), entraîné à la vitesse de ce dernier, et capable de se déplacer entre une position basse et une position haute, ainsi qu'un rouleau antagoniste (35) placé au-dessus de lui.

## Patentansprüche

1. Verfahren zum homogenen Erwärmen von Glasscheiben oder -platten gleichbleibender Grösse in einem horizontalen, homogen beheizten Tunnelofen, den sie in horizontaler Lage durchlaufen, wobei die Glasscheiben in ununterbrochener Reihenfolge in einem gleichbleibenden Abstand (A) auf einem horizontalen Hauptförderer (2) liegen, der sie mit konstanter Geschwindigkeit durch den Ofen (1) transportiert, dadurch gekennzeichnet, dass diese Glasscheiben (20, 20' ...) nacheinander in dem gewünschten Arbeitstakt in einer gegebenen Warteposition vor dem horizontalen Hauptförderer (2) jeweils mit einem Abstand (B) von der vorausgehenden bereits auf dem Förderer liegenden Glasscheibe aufgelegt werden, wobei dieser Abstand (B) kleiner ist als der gewünschte Abstand (A), und dass sie einen Augenblick lang in dieser Position angehalten und durch den Förderer (2) in dem Zeitpunkt weitertransportiert werden, in dem der Abstand erreicht ist.

2. Verfahren nach Anspruch 1, dadurch gekennzeichnet, dass die Glasscheiben (20, 20' ...) nacheinander auf einen vor dem Hauptförderer (2) angeordneten Hilfsförderer (12) mit separatem Antrieb aufgelegt und jeweils am Ende dieses Hilfsförderers mit einem gegenseitigen Abstand transportiert werden, der kleiner ist als der endgültige gewünschte Abstand (A), dass der Hilfsförderer jedesmal angehalten wird, wenn eine Glasscheibe sein Ende erreicht, und dass der Abstand zu der vorausgehenden Glasscheibe gemessen wird und der Weitertransport mit dem Hauptförderer in dem Augenblick erfolgt, in dem der gewünschte Abstand erreicht ist.

3. Verfahren nach Anspruch 2, dadurch gekennzeichnet, dass die Glasscheiben in dem gewünschten Abstand und in dem gewünschten Arbeitstakt während der Stillstandszeiten des Hilfsförderers auf diesen aufgelegt werden.

4. Vorrichtung zur Durchführung des Verfahrens nach einem der Ansprüche 2 und 3, mit einem im Innern eines Durchlaufofens (1) angeordneten, mit konstanter Geschwindigkeit angetriebenen horizontalen Hauptförderer (2) und einem mit einem separaten Antrieb (16) versehenen vor dem Hauptförderer (2) angeordneten Hilfsförderer (12), dadurch gekennzeichnet, dass im Übergangsbereich der beiden Förderer ein einer Messeinrichtung zugeordneter Messfühler (38) vorgesehen ist, wodurch der Abstand zwischen der hinteren Kante der letzten von dem Hauptförderer (2) transportierten Glasscheibe (20) und der vorderen Kante der nachfolgenden Glasscheibe (20') gemessen wird, die in Wartestellung auf dem Hilfsförderer (12) liegt, der seinerseits durch den Messfühler angehalten ist, und dass ein Organ (23) zur Übergabe dieser Glasscheiben auf den Hauptförderer vorgesehen ist, das in dem Augenblick betätigt wird, in dem der gewünschte Abstand erreicht ist.

5. Vorrichtung nach Anspruch 4, dadurch gekennzeichnet, dass der Hilfsförderer (12) mit einer Geschwindigkeit angetrieben wird, die merklich höher ist als die Geschwindigkeit des Hauptförderers (2).

6. Vorrichtung nach Anspruch 5, dadurch gekennzeichnet, dass der Hilfsförderer mit einer Geschwindigkeit angetrieben wird, die 20 bis 50%, und vorzugsweise 20 bis 30% höher ist als die Geschwindigkeit des Hauptförderers.

7. Vorrichtung nach einem der Ansprüche 4 bis 6, dadurch gekennzeichnet, dass die Messeinrichtung für den Abstand zwischen den Kanten der beiden aufeinanderfolgenden Glasscheiben (20, 20') einen mit dem Hauptförderer (2) gekoppelten Impulsgenerator (40) und einen Impulszähler (41) mit Vorwahlschaltung umfasst.

8. Vorrichtung nach einem der Ansprüche 4 bis 6, dadurch gekennzeichnet, dass das Organ zur Übergabe eine zwischen dem Hilfsförderer (12) und der ersten Walze (3) des Hauptförderers (2) angeordnete, mit der Geschwindigkeit des letzteren angetriebene und zwischen einer unteren und einer oberen Stellung heb- und senkbar gelagerte Transportwalze (23) sowie eine oberhalb dieser Transportwalze gelagerte Gegendruckwalze (35) umfasst.

**Claims**

1. Method of homogeneously heating sheets or volumes of glass of constant shape and size by passage flatwise through a horizontal tunnel furnace (1) heated homogeneously in which the volumes are arranged, at a constant spacing (A), in an uninterrupted series on a horizontal principal conveyor (2) which causes them to pass through the furnace (1) at constant speed, characterised in that the volumes (20, 20' ...) are placed one by one at the desired frequency at a given waiting position, upstream of the principal horizontal conveyor (2) at a distance (B) from the preceding volume already engaged on the conveyor less than the desired spacing (A) and held stationary in this position for an instant to be taken by the conveyor (2) when the spacing (A) is reached.

2. Method according to claim 1, characterised in that the volumes (20, 20') are deposited in turn on a auxiliary conveyor (12) which is driven separately arranged upstream of the principal conveyor (2), each brought to the output of the auxiliary conveyor at a distance less than the desired final separation (A), and in that the auxiliary conveyor is stopped whenever a volume arrives at its output, the distance travelled by the preceding volume is measured and transfer to the principal conveyor is carried out at the moment when the desired spacing is reached.

3. Method according to claim 2, characterised in that the volumes are deposited on the auxiliary conveyor at the desired distance and frequency during the rest periods of the conveyor.

4. Device for carrying out a method according to one of claims 2 and 3, comprising a principal horizontal conveyor (2) driven at constant speed inside a tunnel furnace (1) and an auxiliary conveyor (12) having a separate drive (16) upstream of the principal conveyor (2), characterised in that there is provided at the junction of the two conveyors a detector (38) associated with a member measuring the distance between the rearward edge of of the last volume (20) moved by the principal conveyor (2) and the forward end of the following volume (20') waiting on the auxiliary conveyor (12) stopped by the detector to control a member (23) for transferring these volumes on to the principal conveyor at the moment when the desired spacing is achieved.

**0 053 551**

5. Device according to claim 4, characterised in that the auxiliary conveyor (12) is driven at a speed substantially greater than that of the principal conveyor (2).

6. Device according to claim 5, characterised in that the auxiliary conveyor is driven at a speed from 30 to 50%, preferably 20 to 30%, greater than that of the principal conveyor.

7. Device according to one of claims 4 to 6, characterised in that the member measuring the distance between the edges of the two successive volumes (20, 20') comprises an impulse generator (40) coupled to the principal conveyor (2) and an impulse counter (41).

8. Device according to one of claims 4 to 6, characterised in that the transfer member comprises a transfer roller (23) placed between the auxiliary conveyor (12) and the first roller (3) of the principal conveyor (2), driven at the speed of the latter, and capable of displacement between a lower position and a higher position, and a counter-roller (35) placed thereabove.

**Fig.1**

**Fig.2**

Fig:3

0 053 551